# FASCICULE DE BREVET EUROPEEN

(11) **EP 2 630 363 B1**
(45) Date de publication et mention de la délivrance du brevet: **19.07.2023**
(21) Numéro de dépôt: 11771258.8
(22) Date de dépôt: 22.09.2011
(51) Int. Cl.: F02N 11/08, H02J 7/34, B60R 16/033, F02N 19/00, B60L 50/16, B60L 50/40, F02N 11/10

(54) **PROCEDE POUR LA MISE EN OEUVRE D'UN DISPOSITIF DE DEMARRAGE EQUIPANT UN MOTEUR D'UN VEHICULE AUTOMOBILE**
VERFAHREN ZUR VERWENDUNG EINER STARTVORRICHTUNG EINES KRAFTFAHRZEUGMOTORS
METHOD FOR USING A START-UP DEVICE OF A MOTOR VEHICLE ENGINE

(30) Priorité: 19.10.2010 FR 1058501
(43) Date de publication de la demande: 28.08.2013
(73) Titulaire: PSA Automobiles SA, 78300 Poissy (FR)
(72) Inventeur: DAUNAS, Olivier, F-95000 Cergy (FR); BASTIANI, Philippe, F-78300 Poissy (FR)
(86) Numéro de dépôt international: PCT/FR2011/052189
(87) Numéro de publication internationale: WO 2012/052644

(56) Documents cités:
- EP-A1- 0 392 698
- EP-A1- 0 403 051
- EP-A1- 1 369 285
- EP-A1- 1 369 285
- EP-A2- 1 564 403
- EP-A2- 1 564 403
- EP-A2- 1 848 090
- WO-A1-2008/124342
- FR-A- 1 058 501
- FR-A1- 2 912 190
- FR-A1- 2 912 190
- FR-A1- 2 924 536
- FR-A1- 2 935 156
- FR-A1- 2 935 156
- US-A1- 2004 041 403
- US-A1- 2007 113 814
- US-A1- 2007 113 814
- US-A1- 2008 246 443
- US-A1- 2009 108 803
- US-B1- 6 202 615
- US-B1- 6 701 880

## Description

La présente invention revendique la priorité de la demande française 1058501 déposée le 19 octobre 2010.

L'invention est du domaine des procédés et dispositifs de démarrage d'un moteur équipant un véhicule automobile ainsi que des moyens ou accessoires de démarrage d'un tel moteur. Elle a pour objet un procédé pour la mise en oeuvre d'un dispositif de démarrage équipant ledit moteur. Elle a aussi pour objet un calculateur de supervision pour la mise en oeuvre de ce procédé. Elle a encore pour objet un dispositif de maintien en tension centralisé pour la mise en oeuvre de ce procédé. Elle a enfin pour objet un dispositif de démarrage comprenant un tel calculateur de supervision et un tel dispositif de maintien en tension centralisé.

Un véhicule automobile équipé d'un moteur thermique est pourvu d'un dispositif de démarrage pour la mise en marche du moteur thermique.

Le dispositif de démarrage comprend un réseau d'alimentation électrique interposé entre le moteur thermique et une source d'alimentation électrique, telle qu'une batterie. Le réseau d'alimentation électrique comporte notamment un démarreur électrique qui fournit un couple de force au moteur thermique pour sa mise en marche.

Le dispositif de démarrage comprend un élément connu sous l'appellation anglaise « Stop & Start ». Un tel élément permet de couper, à la demande du conducteur, le moteur thermique lorsque la vitesse de déplacement du véhicule automobile est nulle ou quasi-nulle, par exemple à l'arrêt à un feu rouge, à l'approche d'un cédez-le-passage ou toute autre situation comparable, le moteur thermique étant par la suite automatiquement relancé lorsqu'un utilisateur du véhicule automobile sollicite à nouveau le moteur thermique. Ceci a pour avantage de réduire la consommation du véhicule automobile ainsi que la pollution que ce dernier génère.

Le dispositif de démarrage comprend un dispositif de maintien en tension centralisé, couramment dénommé « DMTC », qui est destiné à maintenir le réseau d'alimentation électrique à un niveau de tension suffisamment élevé. Ces dispositions permettent une mise sous tension satisfaisante d'accessoires du véhicule automobile, tels qu'une installation de climatisation, un autoradio, un dispositif de localisation satellitaire par exemple. Le dispositif de maintien en tension centralisé est aussi destiné à apporter un effet « Boost » au moteur thermique à partir d'une augmentation du couple de force délivré au moteur thermique. On pourra par exemple se rapporter aux documents FR 2,935,156, FR2924536A1, EP1848090A2 (PEUGEOT CITROEN AUTOMOBILES SA) qui décrivent un dispositif de démarrage du genre susvisé.

Un tel dispositif de démarrage mérite d'être amélioré pour éviter une usure prématurée du démarreur électrique lorsque ce dernier subit un courant électrique de forte intensité, notamment lors d'un effet « Boost ».

D'autre part, un tel dispositif de démarrage mérite d'être amélioré pour être plus efficace dans certaines conditions particulières d'utilisation, notamment celle où le dispositif de démarrage subit une forte sous-tension.

Enfin, un tel dispositif de démarrage mérite d'être amélioré pour être plus opérationnel dans d'autres conditions d'utilisation, notamment celle où le moteur thermique est difficile à démarrer, par exemple en cas d'une température extérieure très basse, inférieure à -10°C par exemple, et/ou en cas d'une hygrométrie importante, par exemple supérieure à 80%.

Finalement, un tel dispositif de démarrage et/ou un procédé pour la mise en oeuvre d'un tel dispositif de démarrage méritent d'être améliorés, de telle sorte que des performances du réseau d'alimentation électrique soient optimisées et qu'une usure potentielle des pièces constituant le réseau d'alimentation électrique soit minimisée.

Un but général de la présente invention est de fournir une puissance supplémentaire au moteur thermique lors d'une phase de démarrage de ce dernier pour atteindre des objectifs de couple choisis, tout en prenant en compte des contraintes de durabilité d'organes électriques équipant le véhicule automobile, tel qu'un démarreur ou analogue. Un autre but général de la présente invention est d'éviter des sous-tensions pendant la phase de démarrage afin de se prémunir de tout risque de mise à zéro des organes électriques.

Plus particulièrement, un premier but particulier de la présente invention est de proposer un procédé de mise en oeuvre d'un dispositif de démarrage d'un moteur thermique équipant un véhicule automobile, qui permette un maintien d'une qualité optimisée du réseau de bord, par exemple en évitant des mises à zéro et/ou des réinitialisations inopportunes de composants dudit réseau, et qui limite une usure potentielle de pièces constituant le réseau d'alimentation électrique, pour conforter une pérennité dudit réseau. Un deuxième but particulier de la présente invention est de proposer un tel procédé qui optimise une mise en oeuvre du dispositif de démarrage du moteur thermique dans des conditions relativement quelconques d'utilisation. Un troisième but particulier de la présente invention est d'obtenir de tels résultats à partir d'un procédé et d'un dispositif de démarrage relativement simples à mettre en oeuvre et/ou à fabriquer.

Un procédé de la présente invention est un procédé pour la mise en oeuvre d'un dispositif de démarrage d'un moteur thermique équipant un véhicule automobile comprenant un démarreur électrique, un réseau d'alimentation électrique interposé entre le démarreur électrique et une source d'alimentation électrique, un ensemble de super-condensateurs connectés au réseau d'alimentation électrique formant un stockeur d'énergie apte à être sollicité pour venir en soutien à la source d'alimentation électrique lors d'un premier démarrage ou d'un redémarrage du moteur thermique, le procédé comprenant une étape de détection d'une sous-tension, caractérisé en ce le procédé comprend une étape de calcul d'un temps de soutien théorique Tt par un calculateur de supervision pendant lequel l'ensemble de super-condensateurs est mis en série avec la source d'alimentation électrique pour venir en soutien à la dite source d'alimentation électrique, cette étape de calcul comprenant :
- une première phase de calcul d'un premier temps de soutien intermédiaire Tᵢ déterminé en fonction d'une température θₑₘ d'eau-moteur,
- une deuxième phase de calcul d'un deuxième temps de soutien intermédiaire T_{i'} déterminé en fonction d'un état de charge E d'une source d'alimentation électrique du moteur thermique (8), et
- une troisième phase de calcul d'un troisième temps de soutien intermédiaire T_{i"} déterminé en fonction d'une température θₛ d'une source d'alimentation électrique du moteur thermique (8),
- une étape de comparaison des temps de soutien intermédiaire Tᵢ,T_{i'},T_{i"} pour identifier le temps de soutien intermédiaire le plus long qui constitue le temps de soutien théorique Tt,

- une étape de soutien de l'ensemble de super-condensateurs à la source d'alimentation électrique pendant le temps de soutien théorique Tt, si une sous-tension est détectée.

Le procédé comprend préférentiellement une étape supplémentaire au cours de laquelle le temps de soutien théorique Tt est comparé à un temps de soutien effectif Tₑ qui est mesuré par un dispositif de maintien en tension centralisé.

Le procédé comprend avantageusement une étape finale au cours de laquelle :
- le soutien est autorisé si et seulement si le temps de soutien effectif Tₑ est inférieur au temps de soutien théorique Tt.
- le soutien est interdit si et seulement si le temps de soutien effectif Tₑ est supérieur ou égal au temps de soutien théorique Tt.

D'autres caractéristiques et avantages de la présente invention apparaitront à la lecture de la description qui va en être faite d'exemples de réalisation, en relation avec les figures de la planche annexée, dans laquelle :
La figure 1 est une vue schématique d'un véhicule automobile équipé d'un dispositif de démarrage d'un moteur thermique.
La figure 2 est une vue schématique partielle du dispositif de démarrage illustré sur la figure précédente.
La figure 3 est une illustration schématique d'un procédé de mise en oeuvre du dispositif de démarrage illustré sur les figures précédentes.

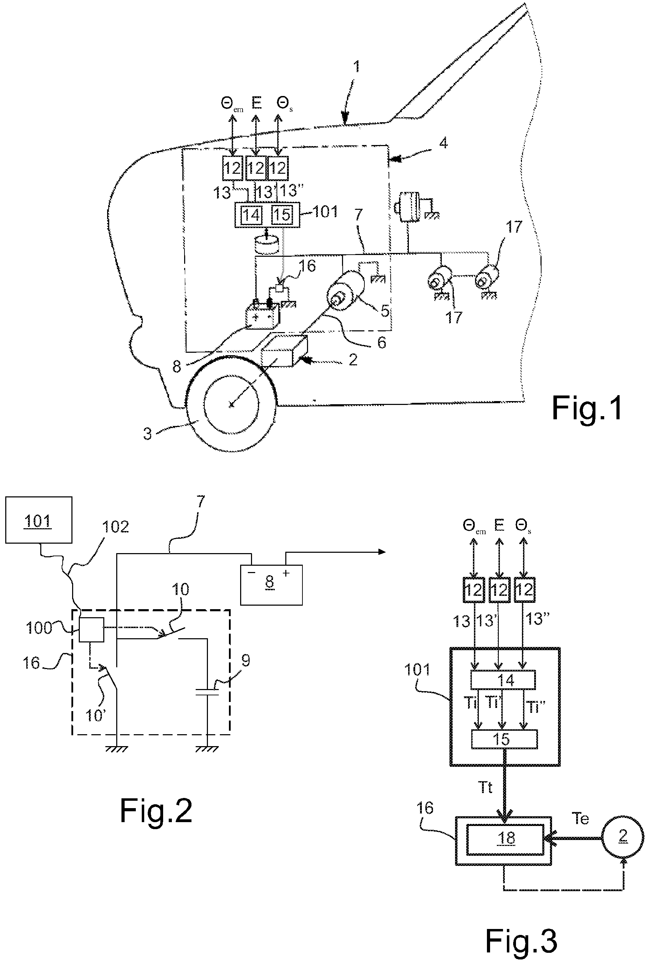

Sur la figure 1, un véhicule automobile 1 est équipé d'un moteur thermique 2. Ce dernier est par exemple un moteur thermique à combustion interne propre à entraîner des roues motrices 3 du véhicule automobile 1. Le moteur thermique 2 est susceptible d'être un moteur hybride sans déroger aux règles de la présente invention. Le véhicule automobile 1 est équipé d'un dispositif de démarrage 4 du moteur thermique 2.

Le dispositif de démarrage 4 comprend un démarreur électrique 5 apte à entraîner en rotation un arbre d'entraînement 6 du moteur thermique 2 pour déclencher sa mise en route.

Le dispositif de démarrage 4 comprend aussi un réseau d'alimentation électrique 7 interposé entre le démarreur électrique 5 et une source d'alimentation électrique 8, telle qu'une batterie électrochimique.

En se reportant également sur la figure 2, le dispositif de démarrage 4 comprend un ensemble de super-condensateurs 9 qui sont connectés au réseau d'alimentation électrique 7 par l'intermédiaire d'un premier relais commandé 10, tel qu'un ou plusieurs transistors MOS montés en parallèle entre eux ou analogue. En position ouverte, le premier relais commandé 10 isole l'ensemble de super-condensateurs 9 tandis qu'en position fermé, le premier relais commandé 10 relie en série l'ensemble de super-condensateurs 9 à la source d'alimentation électrique 8. L'ensemble de super-condensateurs 9 forme un stockeur d'énergie apte à être sollicité pour venir en soutien à la source d'alimentation électrique 8, lors d'un premier démarrage du moteur thermique 2 ou lors d'un redémarrage de ce dernier. L'ensemble de super-condensateurs 9 est notamment constitué d'une pluralité de capacités reliées en série entre elles.

Le dispositif de démarrage 4 comprend également une unité de commande 100 du premier relais commandé 10. L'unité de commande 100 est constitutive d'un dispositif de maintien en tension centralisé 16, couramment dénommé « DMTC », qui est destiné à maintenir le réseau d'alimentation électrique 7 à un niveau de tension suffisamment élevé. L'unité de commande 100 est en relation avec un calculateur de supervision 101 par l'intermédiaire d'un bus LIN 102, ou analogue.

En se reportant également sur la figure 3, le calculateur de supervision 101 est raccordé à une pluralité de capteurs 12,12',12" d'informations 13,13',13" relatives à un état de paramètres respectifs du véhicule automobile 1. Plus particulièrement, un premier capteur 12 est destiné à mesurer une première information 13 relative à une température θₑₘ d'une eau-moteur. Plus particulièrement encore, un deuxième capteur 12' est destiné à mesurer une deuxième information 13' relative à un état de charge E de la source d'alimentation électrique 8. Plus particulièrement enfin, un troisième capteur 12" est destiné à mesurer une troisième information 13" relative à une température θₛ de la source d'alimentation électrique 8.

Les capteurs 12,12',12" d'informations 13,13',13" détermine une cartographie qui est révélatrice de l'état du véhicule. Ainsi, à partir de la première information 13 relative à la température θₑₘ de l'eau-moteur, il apparaît que plus la température θₑₘ de l'eau moteur est froide, plus le moteur thermique 2 est difficile à démarrer. A partir de la deuxième information 13' relative à l'état de charge E de la source d'alimentation électrique 8, il apparaît que plus l'état de charge E est bas, moins la source d'alimentation électrique 8 est à même de fournir une énergie électrique suffisante pour délivrer un couple de forces satisfaisant, ce qui altère globalement les performances du réseau d'alimentation électrique 7. A partir de la troisième information 13" relative à la température θₛ de la source d'alimentation électrique 8, il apparaît que plus la température θₛ de la source d'alimentation électrique 8 est basse, plus une résistance interne de cette dernière est grande, ce qui est un inconvénient pour délivrer un couple de forces satisfaisant et ce qui altère globalement les performances du réseau d'alimentation électrique 7.

La présente invention propose avantageusement de déterminer la valeur d'un temps de soutien pendant lequel l'ensemble de super-condensateurs 9 est mis en série avec la source d'alimentation électrique 8. Plus particulièrement, dans un premier mode de fonctionnement du véhicule, dit mode normal, la présente invention propose de calculer ledit temps de soutien en fonction d'un certain nombre de paramètres. Plus particulièrement encore, dans un deuxième mode de fonctionnement du véhicule, dit mode dégradé, la présente invention propose de déterminer arbitrairement ledit temps de soutien.

Selon le premier mode, pour chaque information 13,13',13" un temps de soutien intermédiaire respectif Tᵢ,T_{i'},T_{i"} est calculé par l'intermédiaire de moyens de calcul 14 constitutifs du calculateur de supervision 101. Plus précisément, les moyens de calcul 14 déterminent un premier temps de soutien intermédiaire Tᵢ à partir de la première information 13. De même, les moyens de calcul 14 déterminent un deuxième temps de soutien intermédiaire T_{i'} à partir de la deuxième information 13'. Enfin, les moyens de calcul 14 déterminent un troisième temps de soutien intermédiaire T_{i"} à partir de la troisième information 13".

Le calculateur de supervision 101 comporte également des moyens de comparaison 15 qui sont aptes à comparer les temps de soutien intermédiaires entre eux Tᵢ,T_{i'},T_{i"}, et à identifier celui qui est le plus grand d'entre eux qui constitue *in fine* un temps de soutien théorique Tt. Le temps de soutien théorique Tt est transmis par le calculateur de supervision 101 à l'unité de commande 100 du dispositif de maintien en tension centralisé 16 par l'intermédiaire du bus LIN 102.

L'unité de commande 11 reçoit l'information relative au temps de soutien théorique Tt ainsi qu'une autorisation de mise en oeuvre si une sous-tension est détectée. Ladite information et ladite autorisation soit transmise depuis le calculateur de supervision 101 à l'unité de commande 11. Cette dernière est apte à mettre en position fermée le premier relais commandé 10 tandis qu'est mis en position ouverte un deuxième relais commandé 10' disposé en parallèle du premier relais commandé 10 et de l'ensemble de super-condensateurs 9. Ces dispositions permettent une mise sous tension satisfaisante d'accessoires 17 du véhicule automobile 1, tels qu'une installation de climatisation, un autoradio, un dispositif de localisation satellitaire par exemple. Le dispositif de maintien en tension centralisé 16 est aussi apte à apporter un effet « Boost » au moteur thermique 2 à partir d'une augmentation du couple de force délivré au moteur thermique 2. Autrement dit, le premier relais commandé 10 commute si et seulement si une sous-tension est avérée et l'autorisation de mis en oeuvre est positive.

Le soutien procuré par le dispositif de maintien en tension centralisé 16 n'étant pas nécessaire pendant toute la phase de démarrage, la présente invention propose d'activer le dispositif de maintien en tension centralisé 16 pendant le temps de soutien théorique Tt juste nécessaire qui a été calculé à partir des informations 13,13',13" révélatrices de l'état du véhicule. Il en découle une optimisation de l'utilisation du dispositif de maintien en tension centralisé 16 pour améliorer des performances mécaniques du réseau d'alimentation électrique 7 et pour limiter une usure potentielle des pièces constituant le réseau d'alimentation électrique 7, et notamment du démarreur électrique 5. Pour ce faire, le dispositif de maintien en tension centralisé 16 est à même de mesurer un temps de soutien effectif Tₑ et est à même de comparer ce dernier avec le temps de soutien théorique Tt préalablement reçu du calculateur de supervision 101 par l'intermédiaire de moyens de comparaison 18 que comprend le dispositif de maintien en tension centralisé.

Autrement dit, le soutien est appliqué au dispositif de démarrage 4 dès la commutation du relais commandé 10. Dès que le temps de soutien effectif Tₑ est supérieur ou égal à un temps de soutien théorique Tt, l'unité de commande 100 n'autorise plus la mise en oeuvre du soutien. Le temps de soutien effectif Tₑ est calculé à partir de l'instant où le relais commandé 10 est commuté.

En fonction de la phase de vie du moteur thermique 2 et du temps de soutien théorique Tt, une instruction est élaborée par le calculateur de supervision 101 afin d'autoriser ou d'interdire la mise en oeuvre du dispositif de maintien en tension centralisé 16 pour détecter une sous-tension, qui aurait pour incidence de déclencher une commutation du relais commandé 10. En fait, les phases de vie du moteur thermique 2 au cours desquelles le dispositif de maintien en tension centralisé 16 est sollicité correspondent à la phase de premier démarrage du moteur thermique 2.

On notera que le procédé de la présente invention est susceptible d'être mis en oeuvre en prenant en compte uniquement deux informations 13,13'; 13,13" ; 13',13" choisies parmi les trois informations 13,13',13" citées ci-dessus.

Selon le deuxième mode, la commutation du relais commandé 10 est susceptible d'être forcée et dans ce cas, le temps de soutien théorique Tt est constant et fixée de manière arbitraire. En effet, dans le cas où le deuxième relais commandé 10' est abîmé, et/ou consécutivement à un test en Sécurité De Fonctionnement, couramment dénommé « SDF », qui est opéré en fin de roulage, il peut être choisi de forcer la commutation lors du prochain démarrage du véhicule. Dans ce cas-là, la valeur du temps de soutien théorique Tt est déterminé arbitrairement à une valeur constante.

A titre d'exemple, le temps de soutien théorique Tt obtenu par la Demanderesse est compris entre 0,2 secondes et 6 secondes.

Dans le cas où le temps de soutien théorique Tt est nul, le dispositif de maintien en tension centralisé 16 n'est pas autorisé à commuter l'ensemble de super-condensateurs 9, car l'autorisation de démarrage interdira la commutation. Une amélioration est apportée en utilisant qu'un seul flux, à savoir le temps de soutien théorique Tt, ainsi si le dispositif de maintien en tension centralisé 16 reçoit une information comportant un temps de soutien nul, le dispositif de maintien en tension centralisé 16 interdit la commutation.

L'utilisation d'un bus « LIN, » d'après l'acronyme anglais « Local Interconnect Network », comme média de communication entre le calculateur de supervision 101 du moteur 17 et le dispositif de maintien en tension centralisé 16 permet d'améliorer encore le procédé susvisé. En effet, le bus « LIN » étant sensible au sous-tension, la communication peut être coupée en début de démarrage. Ainsi, si le temps de soutien effectif Tₑ était mesuré par le calculateur de supervision 101, ce dernier ne pourrait pas systématiquement indiquer au dispositif de maintien en tension centralisé 16 que le temps soutien effectif Tₑ est dépassé si la communication « LIN » est coupée. C'est pour cette raison que le temps de soutien effectif Tₑ est mesuré par le dispositif de maintien en tension centralisé 16.

Il découle de ces dispositions une utilisation avantageuse du dispositif de maintien en tension centralisé 16, habituellement utilisé dans la cadre d'un dispositif « Stop & Start » lors de phase de redémarrage, pour améliorer une phase de premier démarrage du moteur thermique 2, à partir de la mise en oeuvre d'un procédé répartissant au mieux les étapes qu'il comporte entre le dispositif de maintien en tension centralisé 16 et le calculateur de supervision 101, ce dernier faisant préférentiellement partie intégrante d'un calculateur multifonction moteur équipant le véhicule automobile 1.

## Revendications

1. Procédé pour la mise en oeuvre d'un dispositif de démarrage (4) d'un moteur thermique (2) équipant un véhicule automobile (1) comprenant un démarreur électrique (5), un réseau d'alimentation électrique (7) interposé entre le démarreur électrique (5) et une source d'alimentation électrique (8), un ensemble de super-condensateurs (9) connectés au réseau d'alimentation électrique (7) formant un stockeur d'énergie apte à être sollicité pour venir en soutien à la source d'alimentation électrique (8) lors d'un premier démarrage ou d'un redémarrage du moteur thermique (2), le procédé comprenant une étape de détection d'une sous-tension,
caractérisé en ce le procédé comprend une étape de calcul d'un temps de soutien théorique Tt par un calculateur de supervision (101) pendant lequel l'ensemble de super-condensateurs (9) est mis en série avec la source d'alimentation électrique (8) pour venir en soutien à la dite source d'alimentation électrique (8), cette étape de calcul comprenant :
• une première phase de calcul d'un premier temps de soutien intermédiaire Tᵢ déterminé en fonction d'une température θₑₘ d'eau-moteur,
• une deuxième phase de calcul d'un deuxième temps de soutien intermédiaire T_{i'} déterminé en fonction d'un état de charge E d'une source d'alimentation électrique du moteur thermique (8), et
• une troisième phase de calcul d'un troisième temps de soutien intermédiaire T_{i"} déterminé en fonction d'une température θₛ d'une source d'alimentation électrique du moteur thermique (8),
• une étape de comparaison des temps de soutien intermédiaire Tᵢ,T_{i'},T_{i"} pour identifier le temps de soutien intermédiaire le plus long qui constitue le temps de soutien théorique Tt,
- une étape de soutien de l'ensemble de super-condensateurs (9) à la source d'alimentation électrique (8) pendant le temps de soutien théorique Tt, si une sous-tension est détectée.

2. Procédé selon la revendication 1, **caractérisé en ce que** le procédé comprend une étape supplémentaire au cours de laquelle le temps de soutien théorique Tt est comparé à un temps de soutien effectif Tₑ qui est mesuré par un dispositif de maintien en tension centralisé (16).

3. Procédé selon la revendication 2, **caractérisé en ce que** le procédé comprend une étape finale au cours de laquelle :
- le soutien est autorisé si et seulement si le temps de soutien effectif Tₑ est inférieur au temps de soutien théorique Tt.
- le soutien est interdit si et seulement si le temps de soutien effectif Tₑ est supérieur ou égal au temps de soutien théorique Tt.

## Patentansprüche

1. Verfahren zum Implementieren einer Startvorrichtung (4) für einen Verbrennungsmotor (2), der in ein Kraftfahrzeug (1) eingebaut ist, umfassend einen elektrischen Starter (5), ein elektrisches Energieversorgungsnetz (7), das zwischen dem elektrischen Starter (5) angeordnet ist, und ein elektrische Energiequelle (8), eine Gruppe von Superkondensatoren (9), die mit dem elektrischen Energieversorgungsnetz (7) verbunden sind und einen Energiespeicher bilden, der abgerufen werden kann, um die elektrische Energiequelle (8) während eines ersten Starts oder a Neustart der Wärmekraftmaschine (2), wobei das Verfahren einen Schritt des Erfassens einer Unterspannung umfasst, **dadurch gekennzeichnet, dass** das Verfahren einen Schritt des Berechnens einer theoretischen Unterstützungszeit Tt durch einen Überwachungscomputer (101) umfasst, während dessen der Satz von Superkondensatoren (9) mit der elektrischen Energiequelle (8) in Reihe geschaltet wird, um die elektrische Energie zu unterstützen Quelle (8), wobei dieser Berechnungsschritt umfasst:
• eine erste Phase der Berechnung einer ersten Zwischenunterstützungszeit Ti, die gemäß einer Wassermotortemperatur hem bestimmt wird,
• eine zweite Phase der Berechnung einer zweiten Stützzeit Zwischen Ti. in Abhängigkeit von einem Ladezustand E einer elektrischen Energiequelle der Wärmekraftmaschine (8) bestimmt, und
• eine dritte Phase der Berechnung einer dritten Zwischenstützzeit Ti- bestimmt gemäß einer Temperatur es von a elektrische Energiequelle für die Wärmekraftmaschine (8),
• ein Schritt zum Vergleichen von Zwischenunterstützungszeiten um die längste Zwischenstützzeit zu ermitteln, die bildet die theoretische Stützzeit Tt,
- einen Schritt des Unterstützens des Satzes von Superkondensatoren (9) an der elektrischen Energiequelle (8) für die theoretische Unterstützungszeit Tt, wenn eine Unterspannung erfasst wird.

2. Verfahren nach Anspruch 1, **dadurch gekennzeichnet, dass** das Verfahren einen zusätzlichen Schritt umfasst, während dessen die theoretische Haltezeit Tt mit einer tatsächlichen Haltezeit Te verglichen wird, die von einer zentralen Spannungshaltevorrichtung (16) gemessen wird.

3. Verfahren nach Anspruch 2, **dadurch gekennzeichnet, dass** das Verfahren einen letzten Schritt umfasst, während dessen:
- Die Unterstützung ist nur dann zulässig, wenn die tatsächliche Unterstützungszeit Te kleiner ist als die theoretische Unterstützungszeit Tt.
- Die Unterstützung ist genau dann verboten, wenn die tatsächliche Unterstützungszeit Te größer oder gleich der theoretischen Unterstützungszeit Tt ist.

## Claims

1. Method for implementing a starting device (4) for a thermal engine (2) fitted to a motor vehicle (1) comprising an electric starter (5), an electric power supply network (7) interposed between the electric starter (5) and an electric power source (8), a set of super-capacitors (9) connected to the electric power supply network (7) forming an energy store capable of being called upon to support the electrical power source (8) during a first start or a restart of the heat engine (2), the method comprising a step of detecting an undervoltage, **characterized in that** the method comprises a step of calculating a theoretical support time Tt by a supervision computer (101) during which the set of super-capacitors (9) is placed in series with the electrical power source ( 8) to support said electrical power source (8), this calculation step comprising:
• a first phase of calculation of a first intermediate support time Ti determined according to a water-engine temperature hem,
• a second phase of calculation of a second support time intermediate Ti. determined as a function of a state of charge E of an electric power source of the heat engine (8), and
• a third phase of calculation of a third intermediate support time Ti- determined according to a temperature es of a electrical power source for the heat engine (8),
• a step for comparing intermediate support times to identify the longest intermediate support time that constitutes the theoretical support time Tt,
- a step of supporting the set of super-capacitors (9) to the electrical power source (8) for the theoretical support time Tt, if an undervoltage is detected.

2. Method according to Claim 1, **characterized in that** the method comprises an additional step during which the theoretical holding time Tt is compared with an actual holding time Te which is measured by a centralized tension holding device (16).

3. Method according to Claim 2, **characterized in that** the method comprises a final step during which:
- support is authorized if and only if the actual support time Te is less than the theoretical support time Tt.
- support is prohibited if and only if the actual support time Te is greater than or equal to the theoretical support time Tt.
